# EUROPÄISCHE PATENTSCHRIFT

(11) **EP 4 375 520 B1**
(45) Veröffentlichungstag und Bekanntmachung des Hinweises auf die Patenterteilung: **12.11.2025**
(21) Anmeldenummer: 23211215.1
(22) Anmeldetag: 21.11.2023
(51) Int. Cl.: F16B 37/04

(54) **SCHRAUBENMUTTER MIT EINEM GRUNDKÖRPER UND EINER GEWINDEBOHRUNG**
NUT HAVING A BASE BODY AND A THREADED BORE
ÉCROU FILETÉ DOTÉ D'UN CORPS DE BASE ET D'UN TROU FILETÉ

(30) Priorität: 23.11.2022 AT 508862022
(43) Veröffentlichungstag der Anmeldung: 29.05.2024
(73) Patentinhaber: Stelzhammer, Bernd, 5270 Mauerkirchen (AT)
(72) Erfinder: Stelzhammer, Bernd, 5270 Mauerkirchen (AT)
(74) Vertreter: Hübscher & Partner Patentanwälte GmbH

(56) Entgegenhaltungen:
- JP-U- S53 140 853
- US-A- 2 307 080

## Beschreibung

Die Erfindung bezieht sich auf eine Schraubenmutter mit einem Grundkörper und einem an den Grundkörper angeschlossenen, eine Gewindebohrung aufweisenden Positionierkonus mit einer in die Gewindebohrung mündenden, sich Richtung Grundkörper verjüngenden Öffnung, wobei der Positionierkonus zum Eintreiben in ein Werkstück am freien Endabschnitt eine Schlagkante aufweist, die die Öffnung (8) begrenzt.

Eine derartige Schraubenmutter offenbart die US 2307080 A.

Aus dem Stand der Technik sind Schraubenmuttern bekannt, die einen prismatischen Grundkörper umfassen, wobei beispielsweise die DE202011001662U1 genannt ist. Dieser Grundkörper weist entlang seiner Höhe eine Gewindebohrung auf, in der ein Befestigungsmittel mit einem passenden Gewinde, beispielsweise eine Schraube oder einen Bolzen, durch Verschrauben aufgenommen werden kann. An den Außenkanten des prismatischen Grundkörpers kann ein Werkzeug angesetzt werden, um die Schraubverbindung mittels appliziertem Drehmoments herzustellen und so Schraubenmutter und Befestigungsmittel entlang der Schraubachse anzunähern und so einen Form- bzw. Kraftschluss herzustellen und gegebenenfalls ein Werkstück zwischen Schraubenmutter und Befestigungsmittel zu verklemmen.

Die US20210404503A1 zeigt ebenso eine Schraubenmutter mit einer durchgängigen Gewindebohrung und einem konischen Endabschnitt, mit dem die Schraubenmutter in einem Bohrloch, dessen Durchmesser größer als der Außendurchmesser des Endabschnitts ist, vorpositioniert werden kann.

Die US1787154A zeigt eine Schraubenmutter mit innerer Gewindebohrung und abgerundetem Positionierkonus als Endabschnitt, der in eine an den Positionierkonus angepasste Aufnahme des Werkstücks gelegt wird.

Nachteilig am Stand der Technik ist allerdings, dass die Schraubenmutter aufgrund des Aufbaus ihres Grundkörpers nicht auf einem Werkstück vorpositioniert werden kann. Wird die Schraubenmutter nämlich einfach fluchtend auf ein Bohrloch gelegt und das Befestigungsmittel von der anderen Seite eingeführt, drückt dieses die Schraubenmutter in Ermangelung einer externen fixierenden Kraft aus der Position und die Schraubenmutter muss erneut direkt auf dem Befestigungsmittel positioniert werden. Zwar sind Einschlagmuttern aus dem Stand der Technik bekannt, die durch Eintreiben in das Werkstück drehmomentabgestützt werden können, allerdings ermöglicht die formschlüssige Fixierung einer Einschlagmutter im Werkstück keine Applikation eines Drehmoments an der Schraubenmutter zum Herstellen der Schraubverbindung mehr.

Der Erfindung liegt somit die Aufgabe zugrunde, eine Schraubenmutter ohne äußere Positionier- und Haltekräfte fluchtend über einem Bohrloch eines Werkstücks zu positionieren und dennoch das nötige Drehmoment zum Herstellen der Schraubverbindung an der Schraubenmutter applizieren zu können.

Die Erfindung löst die gestellte Aufgabe dadurch, dass im Übergangsbereich zwischen Grundkörper und Positionierkonus eine quer zur Schraubachse verlaufende Anschlagscheibe vorgesehen ist. Die erfindungsgemäße Schraubenmutter kann also vor dem Herstellen der Schraubverbindung mit ihrem Positionierkonus über dem Bohrloch eines Werkstücks positioniert und in das Werkstück hineingetrieben werden. Durch die konische Form des Positionierkonus verkeilt sich die Schraubenmutter im Werkstück und zwar ohne die fluchtende Verbindung zwischen dem Bohrloch und der Gewindebohrung zu blockieren, ermöglicht aber dennoch das Applizieren eines Drehmoments zum Herstellen der Schraubverbindung. Die üblicherweise beim Einführen eines Befestigungsmittels in ein Bohrloch applizierte Kraft reicht dabei nicht aus, um die verkeilte Schraubenmutter aus dem Bohrloch zu drücken, wodurch der Positionierkonus einen Widerstand gegen das weitere Einführen des Befestigungsmittels bildet. Die in die Gewindebohrung mündende, sich Richtung Grundkörper verjüngende Öffnung des Positionierkonus hat dabei mehrere Funktionen: Erstens leitet sie die applizierte Kraft auf die Schraubenmutter beim Einführen eines Befestigungsmittels in ein Bohrloch aus der Schraubachse, wodurch die Wahrscheinlichkeit eines Lösens der Schraubenmutter nach dem Eintreiben reduziert wird. Zweitens ist die Wandstärke am freien Endabschnitt des Positionierkonus durch die sich verjüngende Öffnung und die Schlagkante verhältnismäßig gering, durch die konische Form aber nach wie vor ausreichend stabil, wodurch, im Gegensatz zu beispielsweise einer Fase, das Eintreiben in das Werkstück erleichtert wird. Drittens bildet sich durch die Verjüngung eine Führungsfläche für das Befestigungsmittel aus, welches so zur Gewindebohrung geführt wird. Dies führt darüber hinaus zu einer Ausrichtung der Schraubenmutter in Richtung der Schraubachse beim Anziehen der Schraubverbindung. Viertens schützt die Öffnung und die sich ausbildende Führungsfläche die in Schraubachse nachgelagerte Gewindebohrung vor Beschädigungen, die beim Eintreiben entstehen können. Je nach Material des Werkstücks kann die Schlagkante über den Durchmesser der Öffnung im Verhältnis zum Außendurchmesser des Endabschnitts des Positionierkonus festgelegt werden und dadurch verschiedene Breiten aufweisen. So sind stumpfe, also breite, Schlagkanten bevorzugter Weise bei Werkstücken aus Holz zu verwenden, da diese die Wahrscheinlichkeit eines ungewollten Spaltens des Werkstücks verringern. Für brüchigere Werkstücke kann allerdings eine scharfe, also schmale, Schlagkante vorteilhafter sein, da diese sich in das Werkstück schneiden kann. Je nach Material des Werkstücks kann der Positionierkonus durch manuellen Druck oder beispielsweise durch einen Hammerschlag auf den Grundkörper in das Werkstück eingetrieben werden. Wird die erfindungsgemäße Schraubenmutter in einem Bohrloch eines Werkstückes verwendet, welches einen wesentlich größeren Durchmesser aufweist, sodass der Positionierkonus nicht eingetrieben werden muss, kann der Positionierkonus lediglich zur Vorpositionierung der Schraubenmutter im Bohrloch dienen. Der Grundkörper ist der Teil der Schraubenmutter, der die Anschlagflächen für ein Werkzeug zum Applizieren eines Drehmoments, also beispielsweise einem Schraubenschlüssel, bildet. Der gesamte Grundkörper kann prismatisch sein, in einer bevorzugten Ausführungsform bildet der Grundkörper allerdings zusammen mit dem Positionierkonus einen gemeinsamen Kegelstumpf, der nur am dem Positionierkonus abgewandten Endabschnitt die Anschlagflächen aufweist.

Um zu vermeiden, dass die erfindungsgemäße Schraubenmutter beim Herstellen der Schraubverbindung zu tief in das Werkstück gezogen wird, wird vorgeschlagen, dass im Übergangsbereich zwischen Grundkörper und Positionierkonus eine quer zur Schraubachse verlaufende Anschlagscheibe vorgesehen ist. Diese Anschlagscheibe hat dieselbe Funktion wie eine Beilagscheibe und verhindert durch ihr flächiges Aufliegen auf dem Werkstück ab einer gewissen Eindringtiefe ein weiteres Eindringen. Die Außenkontur der Anschlagscheibe quer zur Schraubachse ist frei wählbar und hat je nach Form spezifische Vor- oder Nachteile. Ist diese beispielsweise eckig, bevorzugter Weise quadratisch, dienen die Ecken der Anschlagscheibe als Drehmomentabstützung. Ist die Außenkontur rund, kann die Schraubenmutter besonders schonend in das Werkstück getrieben, bzw. durch das Befestigungsmittel hineingezogen werden.

Zwar kann ein erfindungsgemäßer Positionierkonus beispielsweise durch Schweißen am Grundkörper befestigt werden, die erfindungsgemäße Schraubenmutter kann aber gleichzeitig einfacher und stabiler hergestellt werden, wenn Grundkörper und Positionierkonus einstückig ausgeführt sind. Dadurch werden Schwachstellen im Verbindungsbereich zwischen Grundkörper und Positionierkonus vermieden, die insbesondere beim Applizieren höherer Drehmomente zu einer Beschädigung der Schraubenmutter führen könnten.

Die Schraubenmutter kann längere Befestigungsmittel aufnehmen und trotz geringerem Materialaufwand eine stabilere Schraubverbindung ermöglichen, wenn Grundkörper und Positionierkonus eine gemeinsame Gewindebohrung ausbilden. Zufolge dieser Maßnahmen kann das Befestigungsmittel durch den Positionierkonus in den Grundkörper geschraubt werden. Dadurch werden auf die Schraubverbindung wirkende Kräfte gleichmäßiger in die Schraubenmutter eingeleitet, da die Schraubenmutter entlang der Schraubachse tiefer vom Befestigungsmittel durchsetzt werden kann und so eine großflächigere Kraftübertragung möglich ist. Insbesondere wenn Positionierkonus und Grundkörper aus separaten Teilen zusammengefügt werden, werden verbindungstechnisch bedingte Schwachstellen aufgrund der durchsetzenden Schraubverbindung kompensiert. Da der Grundkörper ebenso von der Gewindebohrung durchsetzt ist, wird bei gleichen Außenabmessungen weniger Material zu dessen Herstellung benötigt. In einer bevorzugten Ausführungsform durchsetzt die Gewindebohrung die gesamte Schraubenmutter und der Grundkörper weist eine zweite Öffnung auf, sodass das Befestigungsmittel die Schraubenmutter in Richtung der Schraubachse vollständig durchsetzen oder sogar wieder aus diesem austreten kann. Auch wenn Grundkörper und Positionierkonus eine gemeinsame Gewindebohrung ausbilden, muss die Gewindebohrung nicht zwangsläufig entlang ihrer gesamten Länge mit einem Gewinde versehen sein.

Die Schraubenmutter kann besonders kompakt ausgeführt werden, wenn der größte Durchmesser des Positionierkonus quer zur Schraubachse den größten Durchmesser des Grundkörpers quer zur Schraubachse nicht übersteigt. Dies bedeutet, dass dieser Durchmesser des Positionierkonus kleiner oder gleich diesem Durchmesser des Grundkörpers ist. Zufolge dieser Maßnahmen kann die Dimensionierung der Schraubenmutter an die gewünschte Befestigungsart angepasst werden, beispielsweise durch eine Größenanpassung des Grundkörpers an eine bestimmte Schraubenschlüsselgröße.

Um die Schraubenmutter in das Werkstück einzutreiben, ohne dies übermäßig zu beschädigen, kann die Schlagkante insbesondere für Werkstücke aus porösen oder brüchigen Materialien eine Schneide zum Eintreiben in ein Werkstück aufweisen. So kann die beim Eintreiben aufgebrachte Kraft über eine sehr kleine Fläche, also mit hohem lokalen Druck, in das Werkstück eingeleitet werden. Die Schneide verläuft bevorzugt über die gesamte Schlagkante, sodass die Kraft zum Eintreiben gleichmäßig in das Werkstück geleitet wird.

Um die Schraubenmutter für übliche Anwendungen ohne zu hohen Kraftaufwand gleichermaßen ausreichend tief in das Werkstück zu treiben und dennoch ausreichend fest zu verkeilen, wird vorgeschlagen, dass der halbe Öffnungswinkel des Positionierkonus zwischen 10° und 25°, bevorzugter Weise 15°, beträgt. Bei zu großem Winkel kann der Positionierkonus nur mehr schwer in das Werkstück getrieben werden und spaltet dieses eventuell sogar. Bei zu kleinen Winkeln wird der Positionierkonus allerdings nicht ausreichend verkeilt. Versuche haben gezeigt, dass bei Winkeln zwischen 10° und 25°, bevorzugter Weise 15°, einerseits ein materialschonendes Eintreiben in das Werkstück bei üblicherweise auf die Schraubenmutter applizierten Kräften und andererseits ein gutes Verkeilen des Positionierkonus im Werkstück ermöglicht werden kann.

Wird die Schraubbewegung zum Herstellen der Schraubverbindung nicht über die Schraubenmutter, sondern über das Befestigungsmittel appliziert, kann sich die Schraubenmutter wenn sie nicht ausreichend verkeilt ist, durch das übertragene Drehmoment im Bohrloch mitdrehen. Um die Schraubenmutter aber bei dieser Befestigungsmethode ebenfalls ohne externe Mittel gegen das wirkende Drehmoment abzustützen, sodass die Schraubverbindung dennoch hergestellt werden kann, wird vorgeschlagen, dass an der Mantelfläche des Positionierkonus verlaufende Längsrillen zur Drehmomentabstützung der Schraubenmutter vorgesehen sind. Wird der Positionierkonus in das Werkstück eingetrieben, erhöhen die Längsrillen die Interaktionsfläche zwischen Positionierkonus und Werkstück, wodurch die Reibungskräfte steigen. Außerdem bilden die Längsrillen nicht nur Schneidkanten zum leichteren Eintreiben in das Werkstück, sondern auch einen Anschlag für das Werkstück für Kräfte und Momente, die tangential auf den Positionierkonus wirken, also beispielsweise das von einem Befestigungsmittel beim Schrauben übertragene Drehmoment. Diese Längsrillen verlaufen im Wesentlichen orthogonal zur Schlagkante und um den halben Öffnungswinkel zur Schraubachse versetzt in Richtung des an den Grundkörper grenzenden Endabschnitts des Positionierkonus. Dadurch wird eine Abstützung unabhängig vom Drehsinn der Schraubbewegung ermöglicht. Es ist allerdings nicht zwingend erforderlich, dass sich die Längsrillen über die gesamte Länge zwischen den Endabschnitten erstrecken. Auch können die Längsrillen im lokalen Maßstab von ihrem oben beschriebenen orthogonalen Verlauf abweichen, solange dieser Verlauf im größeren Maßstab orthogonal zur Schlagkante ist. So können nämlich auch beispielsweise zickzackförmige Längsrillen vorgesehen sein. Anstelle der Längsrillen können zwar prinzipiell auch Längsrippen vorgesehen sein, da sich zwischen zwei Längsrippen zwangsläufig auch eine erfindungsgemäße Längsrille ausbildet.

Je nach Einsatzgebiet und den verwendeten Materialien und Dimensionierungen kann der Fall auftreten, dass die Schraubenmutter trotz ihrer verkeilten Lage im Werkstück nicht ausreichend gegen ein auftretendes Drehmoment bei der Schraubverbindung abgestützt ist. Um in einem solchen Fall ein Durchdrehen der Schraubenmutter zu verhindern, kann die Anschlagscheibe wenigstens einen Arretierdorn zur Drehmomentabstützung aufweisen. Dieser Arretierdorn wird durch das Anziehen der Schraubverbindung in das Werkstück getrieben und verankert und sichert die Schraubenmutter dadurch gegen Drehbewegungen. Dieser Arretierdorn ist vorteilhafter Weise möglichst weit vom Mittelpunkt bzw. der Gewindebohrung entfernt, da ein Arretierdorn gegebener Größe dadurch höhere Momente aufnehmen kann, bevor er sich aus der Verankerung löst.

Alternativ zu einer Anschlagscheibe kann im Übergangsbereich zwischen Grundkörper und Positionierkonus eine Beilagscheibenaufnahme vorgesehen sein, deren größter Durchmesser quer zur Schraubachse geringer als der größte Durchmesser des Grundkörpers quer zur Schraubachse ist. Zufolge dieser Maßnahmen kann eine Beilagscheibe für die Schraubenmutter verwendet werden, deren Größe bzw. Durchmesser an die beteiligten Komponenten angepasst werden kann. Dadurch, dass der größte Durchmesser der Beilagscheibenaufnahme quer zur Schraubachse geringer als der größte Durchmesser des Grundkörpers quer zur Schraubachse ist, bildet der Grundkörper einen Anschlag für die Beilagscheibe entlang der Schraubachse. In einer bevorzugten Ausführungsform sind Beilagscheibeninnendurchmesser und Beilagscheibenaufnahme so aufeinander abgestimmt, dass die Beilagscheibe mittels Klemmpassung an der Beilagscheibenaufnahme gelagert werden kann. Analog zur oben beschriebenen Anschlagscheibe kann auch die Außenkontur der Beilagscheibe quer zur Schraubachse frei wählbar sein.

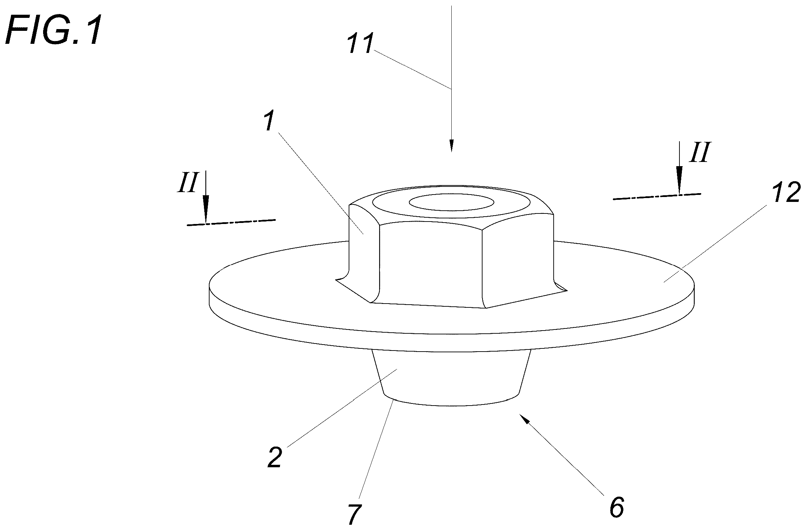

In der Zeichnung ist der Erfindungsgegenstand beispielsweise dargestellt. Es zeigen
- Fig. 1: eine erfindungsgemäße Schraubenmutter einer ersten Ausführungsform,
- Fig. 2: einen Schnitt entlang der Linie II - II der Fig. 1 durch eine erfindungsgemäße Schraubenmutter der ersten Ausführungsform als Teil einer Schraubverbindung mit einem Befestigungsmittel in einem Werkstück und
- Fig. 3: einen der Fig. 2 entsprechenden Schnitt mit einer zweiten Ausführungsform einer erfindungsgemäßen Schraubenmutter.

Eine erfindungsgemäße Schraubenmutter umfasst einen Grundkörper 1 und einen Positionierkonus 2, der an den Grundkörper 1 angeschlossen ist. Grundkörper 1 und Positionierkonus 2 können entweder separat gefertigt und verbunden oder bevorzugter Weise einstückig gefertigt sein. Der Positionierkonus 2 weist eine Gewindebohrung 3 zur Aufnahme eines Befestigungsmittels 4, wie beispielsweise einer Schraube oder einen Bolzen auf. In beiden gezeigten Ausführungsformen weist der Grundkörper 1 ebenso eine Gewindebohrung auf, die eine Verlängerung der Gewindebohrung 3 des Positionierkonus 2 darstellt, wodurch Grundkörper 1 und Positionierkonus 2 eine gemeinsame Gewindebohrung ausbilden.

Die erfindungsgemäße Schraubenmutter wird in ein Werkstück 5, hier zwei zu verklemmende Bretter, eingetrieben. Dazu weist der Positionierkonus 2 an seinem freien Endabschnitt 6 eine Schlagkante 7 auf, die das Eintreiben in das Werkstück 5 erleichtert. Dazu kann die Schlagkante 7, je nach Beschaffenheit des Werkstücks 5, eine Schneide aufweisen, die das Eintreiben erleichtert und das Werkstück 5 schont. Um diesen Effekt noch zu verstärken kann alternativ oder zusätzlich der halbe Öffnungswinkel α des Positionierkonus 2 zwischen 10° und 25°, bevorzugt 15° betragen. Die Schlagkante 7 begrenzt am freien Endabschnitt 6 eine in die Gewindebohrung 3 mündende, sich Richtung Grundkörper 1 verjüngende Öffnung 8. Diese dient zur Aufnahme des Befestigungsmittels 4 wobei die Innenseite des Endabschnitts durch die sich verjüngende Öffnung 8 eine Leitfläche 9 für das Befestigungsmittel 4 bildet, sodass dieses zum Innengewinde der Gewindebohrung 3 geführt wird.

Wird also das Befestigungsmittel 4 so in das Werkstücks 5 getrieben, dass dessen Bohrung 10 und die Gewindebohrung 3 fluchtend ausgerichtet sind, kann von der gegenüberliegenden Seite des Werkstücks 5 das Befestigungsmittel 4 eingeführt werden. Dieses drückt beim initialen Kontakt mit dem Positionierkonus 2 die Schraubenmutter nicht aus der Bohrung 10, da die dabei üblichen applizierten Kräfte die Verkeilung des Positionierkonus 2 im Werkstück 5 nicht lösen. Das Befestigungsmittel 4 kann also über Kontakt mit der Leitfläche 9 an die Gewindebohrung 3 herangeführt werden, ohne dass die Schraubenmutter aus dem Werkstück 5 gedrückt wird und zwar bereits innerhalb des Werkstücks 5.

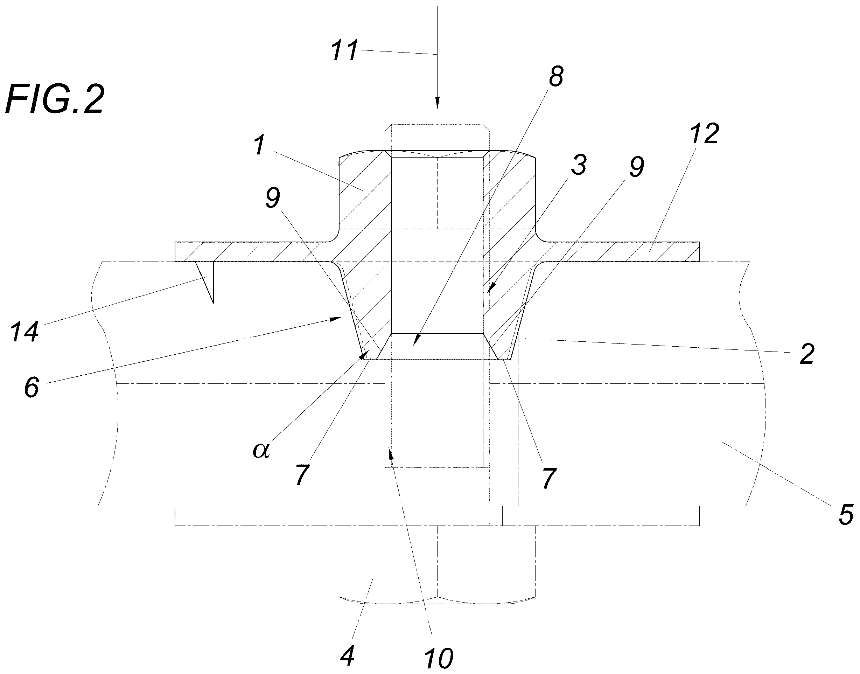

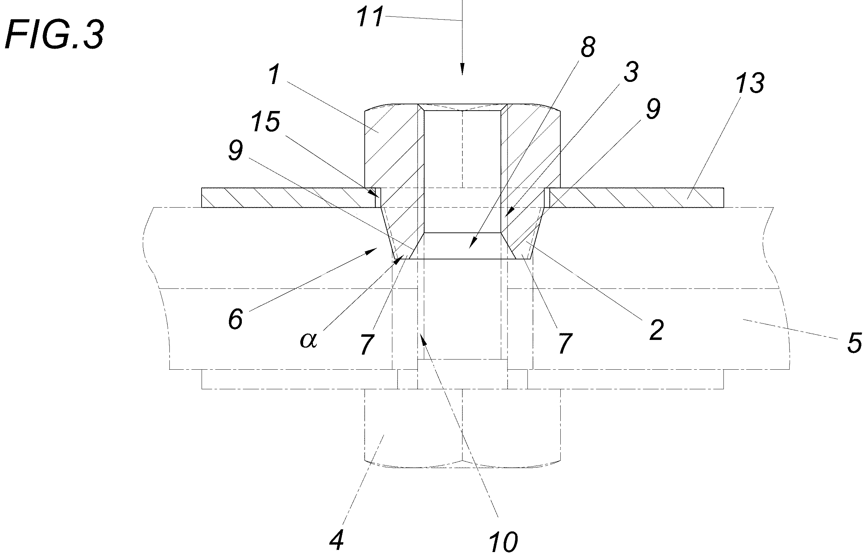

Wird nun durch Applikation eines Drehmoments an der Schraubenmutter oder am Befestigungsmittel 4 eine Schraubverbindung hergestellt, wird der Positionierkonus 2 durch die dadurch entlang der Schraubachse 11 entstehende Zugkraft weiter in das Werkstück 5 getrieben. Um die Eindringtiefe der Schraubenmutter dabei zu begrenzen, kann je nach Ausführungsform eine quer zur Schraubachse 11 verlaufende Anschlagscheibe 12, wie dies in der ersten Ausführungsform in der Fig. 2 gezeigt ist, oder eine Beilagscheibe 13, wie dies in der zweiten Ausführungsform in der Fig. 3 gezeigt ist, vorgesehen sein.

Die Anschlagscheibe 12 ist ein Teil der Schraubenmutter, also fix mit dieser verbunden, und kann einen Arretierdorn 14 aufweisen, der ebenso in das Werkstück 5 eingetrieben wird. Dieser Arretierdorn 14 ermöglicht eine weitere Abstützung gegen ein in die Schraubenmutter eingeleitetes Drehmoment.

Wird, wie in der zweiten Ausführungsform der Fig. 3 gezeigt, eine Beilagscheibe 13 als separates Bauteil verwendet, so ist für diese eine Beilagscheibenaufnahme 15 vorgesehen, deren größter Durchmesser quer zur Schraubachse 11 geringer als der größte Durchmesser des Grundkörpers 1 quer zur Schraubachse 11 ist. Dadurch bildet der Grundkörper 1 einen Anschlag für die Beilagscheibe 13 entlang der Schraubachse 11. Bevorzugter Weise ist die Beilagscheibe 13 über Klemmpassung an der Beilagscheibenaufnahme 15 gelagert.

Der Positionierkonus 2 kann an der Mantelfläche des Positionierkonus 2 verlaufende Längsrillen zur Drehmomentabstützung der Schraubenmutter aufweisen, diese sind aber aus Gründen der Übersichtlichkeit in Fig. 2 und 3 nur als strichlierte, parallel zur Außenwand des Positionierkonus 2 angedeutet.

## Patentansprüche

1. Schraubenmutter mit einem Grundkörper (1) und einem an den Grundkörper (1) angeschlossenen, eine Gewindebohrung (3) aufweisenden Positionierkonus (2) mit einer in die Gewindebohrung (3) mündenden, sich Richtung Grundkörper (1) verjüngenden Öffnung (8), wobei der Positionierkonus (2) zum Eintreiben in ein Werkstück (5) am freien Endabschnitt (6) eine Schlagkante (7) aufweist, die die Öffnung (8) begrenzt, **dadurch gekennzeichnet, dass** im Übergangsbereich zwischen Grundkörper (1) und Positionierkonus (2) eine quer zur Schraubachse (11) verlaufende Anschlagscheibe (12) vorgesehen ist.

2. Schraubenmutter nach Anspruch 1, **dadurch gekennzeichnet, dass** Grundkörper (1) und Positionierkonus (2) einstückig ausgeführt sind.

3. Schraubenmutter nach Anspruch 1 oder 2, **dadurch gekennzeichnet, dass** Grundkörper (1) und Positionierkonus (2) eine gemeinsame Gewindebohrung ausbilden.

4. Schraubenmutter einem der Ansprüche 1 bis 3, **dadurch gekennzeichnet, dass** der größte Durchmesser des Positionierkonus (2) quer zur Schraubachse (11) den größten Durchmesser des Grundkörpers (1) quer zur Schraubachse (11) nicht übersteigt.

5. Schraubenmutter nach einem der Ansprüche 1 bis 4, **dadurch gekennzeichnet, dass** die Schlagkante (7) eine Schneide zum Eintreiben in ein Werkstück (5) aufweist.

6. Schraubenmutter nach einem der Ansprüche 1 bis 5, **dadurch gekennzeichnet, dass** der halbe Öffnungswinkel (α) des Positionierkonus (2) zwischen 10° und 25° beträgt.

7. Schraubenmutter nach einem der Ansprüche 1 bis 6, **dadurch gekennzeichnet, dass** an der Mantelfläche des Positionierkonus (2) verlaufende Längsrillen zur Drehmomentabstützung der Schraubenmutter vorgesehen sind.

8. Schraubenmutter nach einem der Ansprüche 1 bis 7, **dadurch gekennzeichnet, dass** die Anschlagscheibe (12) wenigstens einen Arretierdorn (14) zur Drehmomentabstützung aufweist.

9. Schraubenmutter nach einem der Ansprüche 1 bis 7, **dadurch gekennzeichnet, dass** im Übergangsbereich zwischen Grundkörper (1) und Positionierkonus (2) eine Beilagscheibenaufnahme (15) vorgesehen ist, deren größter Durchmesser quer zur Schraubachse (11) geringer als der größte Durchmesser des Grundkörpers (1) quer zur Schraubachse (11) ist.

## Claims

1. Screw nut with a base body (1) and a positioning cone (2) connected to the base body (1) and having a threaded bore (3) with an opening (8) leading into the threaded bore (3) and tapering towards the base body (1), wherein the positioning cone (2) has an striking edge (7) at the free end section (6) for driving into a workpiece (5), which striking edge (7) delimits the opening (8), **characterised in that** a stop disc (12) extending transversely to the screw axis (11) is provided in the transition area between the base body (1) and the positioning cone (2).

2. Screw nut according to claim 1, **characterised in that** the base body (1) and positioning cone (2) are designed as a single piece.

3. Screw nut according to claim 1 or 2, **characterised in that** the base body (1) and positioning cone (2) form a common threaded bore.

4. Screw nut according to one of claims 1 to 3, **characterised in that** the largest diameter of the positioning cone (2) transverse to the screw axis (11) does not exceed the largest diameter of the base body (1) transverse to the screw axis (11).

5. Screw nut according to one of claims 1 to 4, **characterised in that** the striking edge (7) has a cutting edge for driving into a workpiece (5).

6. Screw nut according to one of claims 1 to 5, **characterised in that** the half opening angle (α) of the positioning cone (2) is between 10° and 25°.

7. Screw nut according to one of claims 1 to 6, **characterised in that** longitudinal grooves extending along the outer surface of the positioning cone (2) are provided for torque support of the screw nut.

8. Screw nut according to one of claims 1 to 7, **characterised in that** the stop disc (12) has at least one locking pin (14) for torque support.

9. Screw nut according to one of claims 1 to 7, **characterised in that** a washer receptacle (15) is provided in the transition area between the base body (1) and the positioning cone (2), the largest diameter of which washer receptacle (15), transverse to the screw axis (11), is smaller than the largest diameter of the base body (1), transverse to the screw axis (11).

## Revendications

1. Écrou fileté doté d'un corps de base (1) et d'un cône de positionnement (2) raccordé au corps de base (1) et présentant un alésage fileté (3) avec une ouverture (8) débouchant dans l'alésage fileté (3) et s'effilant en direction du corps de base (1), le cône de positionnement (2) présentant, pour l'enfoncement dans une pièce à usiner (5), au niveau de la partie d'extrémité libre (6), un bord de frappe (7) qui délimite l'ouverture (8), **caractérisé en ce qu'**une rondelle de butée (12) s'étendant transversalement à l'axe de filetage (11) est disposée dans la zone de transition entre le corps de base (1) et le cône de positionnement (2).

2. Écrou fileté selon la revendication 1, **caractérisé en ce que** le corps de base (1) et le cône de positionnement (2) sont réalisés d'un seul tenant.

3. Écrou fileté selon la revendication 1 ou 2, **caractérisé en ce que** le corps de base (1) et le cône de positionnement (2) forment un alésage fileté commun.

4. Écrou fileté selon l'une des revendications 1 à 3, **caractérisé en ce que** le plus grand diamètre du cône de positionnement (2) transversalement à l'axe de filetage (11) ne dépasse pas le plus grand diamètre du corps de base (1) transversalement à l'axe de filetage (11).

5. Écrou fileté selon l'une des revendications 1 à 4, **caractérisé en ce que** le bord de frappe (7) présente une arête de coupe pour l'enfoncement dans une pièce à usiner (5).

6. Écrou fileté selon l'une des revendications 1 à 5, **caractérisé en ce que** le demi-angle d'ouverture (α) du cône de positionnement (2) est compris entre 10° et 25°.

7. Écrou fileté selon l'une des revendications 1 à 6, **caractérisé en ce que** des rainures longitudinales s'étendant sur la surface d'enveloppe du cône de positionnement (2) sont prévues pour soutenir le couple de l'écrou.

8. Écrou fileté selon l'une des revendications 1 à 7, **caractérisé en ce que** la rondelle de butée (12) comporte au moins une goupille d'arrêt (14) pour soutenir le couple.

9. Écrou fileté selon l'une des revendications 1 à 7, **caractérisé en ce qu'**un logement de rondelle de butée (15) est prévu dans la zone de transition entre le corps de base (1) et le cône de positionnement (2), dont le plus grand diamètre transversalement à l'axe de filetage (11) est inférieur au plus grand diamètre du corps de base (1) transversalement à l'axe de filetage (11).
